# NEUE EUROPÄISCHE PATENTSCHRIFT

(11) **EP 2 509 889 B2**
(45) Veröffentlichungstag und Bekanntmachung des Hinweises auf die Entscheidung über den Einspruch: **17.02.2021**
(45) Hinweis auf die Patenterteilung: 07.01.2015
(21) Anmeldenummer: 10781817.1
(22) Anmeldetag: 20.10.2010
(51) Int. Cl.: B65D 77/02, B65D 77/12, B65D 85/10, B65B 19/22

(54) **VERFAHREN UND VORRICHTUNG ZUM HERSTELLEN VON PACKUNGEN FÜR ZIGARETTEN**
METHOD AND APPARATUS FOR PRODUCING PACKS FOR CIGARETTES
PROCÉDÉ ET DISPOSITIF POUR FABRIQUER DES EMBALLAGES POUR DES CIGARETTES

(30) Priorität: 09.12.2009 DE 102009057373; 23.12.2009 DE 102009060134
(43) Veröffentlichungstag der Anmeldung: 17.10.2012
(60) Teilanmeldung: 13001032.5
(73) Patentinhaber: Focke & Co. (GmbH & Co. KG), 27283 Verden (DE)
(72) Erfinder: BUSE, Henry, 27374 Visselhövede (DE); LOHMANN, Reinhard, 27383 Scheeßel (DE)
(74) Vertreter: Ellberg, Nils
(86) Internationale Anmeldenummer: PCT/EP2010/006412
(87) Internationale Veröffentlichungsnummer: WO 2011/069575

(56) Entgegenhaltungen:
- EP-A1- 2 090 511
- WO-A1-2009/098297
- WO-A1-2009/130227
- GB-A- 587 956
- GB-A- 2 451 180

## Beschreibung

Die Erfindung betrifft ein Verfahren zum Herstellen von Packungen für Zigaretten, gemäß dem Oberbegriff des Anspruchs 1, sowie eine entsprechende Vorrichtung gemäß dem Oberbegriff des Anspruchs 7.

Die Erfindung steht im Zusammenhang mit Packungen für stückiges Verpackungsgut, insbesondere für Zigaretten, bestehend aus einer Außenpackung vorzugsweise in der Ausführung als Klappschachtel und einer Innenpackung als Dichtblock mit einer den Packungsinhalt, insbesondere eine Zigarettengruppe, umgebenden Innenzuschnitts aus vorzugsweise aroma- und feuchtigkeitsdichter, thermisch siegelbarer Folie. die im Bereich einer Innen-Stirnwand eine mehrfach benutzbare Öffnungshilfe und Im Bereich von Seitenwänden der Innenpackung durch thermisches Siegeln miteinander verbundene Faltlappen aufweist.

Eine Zigarettenpackung dieser Art ist aus der IT 2008B0000080 bekannt. Bei diesem Stand der Technik ist ein Zigarettenblock bzw. ein Dichtblock mit einer Zigarettengruppe in einer Klappschachtel als Außenpackung angeordnet. Der Zuschnitt der Innenumhüllung ist mit einer mehrfach benutzbaren Öffnungshilfe versehen. Diese besteht aus einer innerhalb des Zuschnitts der Innenumhüllung durch Stanzlinien definierten Verschlusslasche und einer äußeren, die Verschlusslasche überdeckenden und mit einem Kleber versehenen Betätigungslasche. Der Benutzer erfasst zum Öffnen und Schließen des Dichtblocks die Betätigungslasche. Der Zuschnitt des Dichtblocks ist so um die Zigarettengruppe herumgefaltet, dass einander überdeckende Faltlappen im Bereich von schmalen Seitenflächen und im Bereich einer Rückseite entstehen. Die Faltlappen sind durch thermisches Siegeln miteinander verbunden. Innerhalb des Dichtblocks ist ein Innenkragen aus Karton positioniert, zum Schutz der Zigaretten gegen Wärme und Druck beim thermischen Siegeln der Faltlappen. Eine ähnliche Packung allerdings ohne mehrfach benutzbare Öffnungshilfe ist auch aus der WO 2009/098297 bekannt.

Ein Verfahren und eine Vorrichtung für die Herstellung derartiger Zigarettenpackungen ist aus der WO 2009/130227 A1 bekannt.

Die Erfindung befasst sich mit der Verbesserung von Verfahren und Vorrichtungen für die Herstellung dieser und ähnlicher (Zigaretten-)Packungen. Insbesondere geht es um Voraussetzungen für eine leistungsfähige Fertigung der Packungen.

Ein erfindungsgemäßes Verfahren weist die Merkmale des Anspruchs 1 auf.

Eine erfindungsgemäße Vorrichtung weist die Merkmale des Anspruchs 7 auf.

Ein bevorzugtes Ausführungsbeispiel der Erfindung wird nachfolgend anhand der Zeichnung beschrieben. In dieser zeigen:
- Fig. 1 :: eine (Zigaretten-)Packung des Typs Klappschachtel in räumlicher Darstellung,
- Fig. 2 :: ein Zuschnitt für einen Innenkragen in ausgebreiteter also ungefalteter Stellung,
- Fig. 3 :: eine schematische Darstellung der Faltung eines Dichtblocks,
- Fig. 4 :: ein gefalteter Dichtblock,
- Fig. 5:: eine Vorrichtung zur Herstellung der Packungen gemäß Fig. 1 in schematischer räumlicher Darstellung,
- Fig. 6 :: eine Seitenansicht der Vorrichtung gemäß Fig. 5,
- Fig. 7 :: eine Einzelheit der Vorrichtung im Bereich VII der Fig. 5 in vergrößerter räumlicher Darstellung,

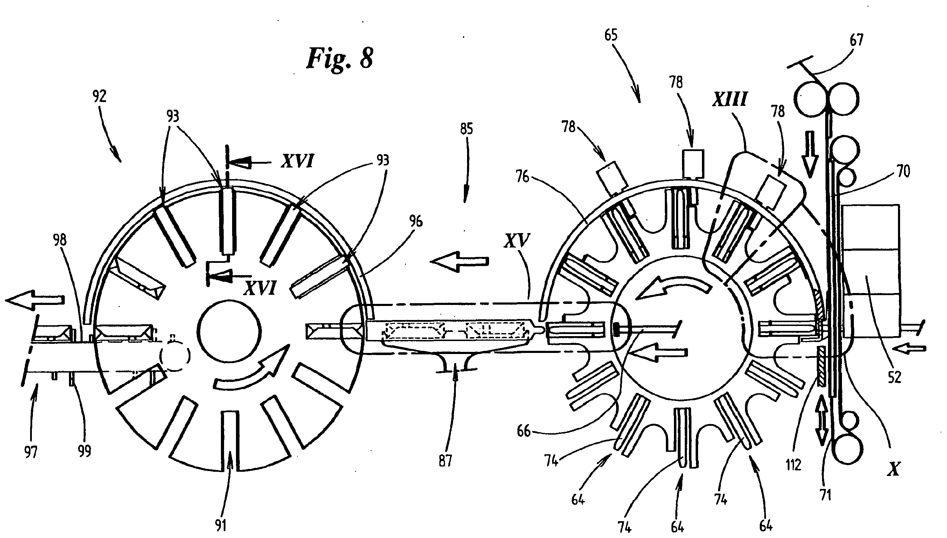

- Fig. 8 :: eine Einzelheit der Vorrichtung gemäß Fig. 5 in vergrößerter Seitenansicht,
- Fig. 9 :: ein Vertikalschnitt durch die Vorrichtung entlang Schnittlinie IX-IX in Fig. 6,
- Fig. 10 und :: eine Einzelheit der Vorrichtung gemäß Fig. 8 im Bereich X in vergrößerter
- Fig. 11 :: Seitenansicht, während verschiedener Phasen des Bewegungsablaufs,
- Fig. 12 :: ein Schnitt durch die Vorrichtung entlang Schnittlinie XII-XII in Fig. 11,

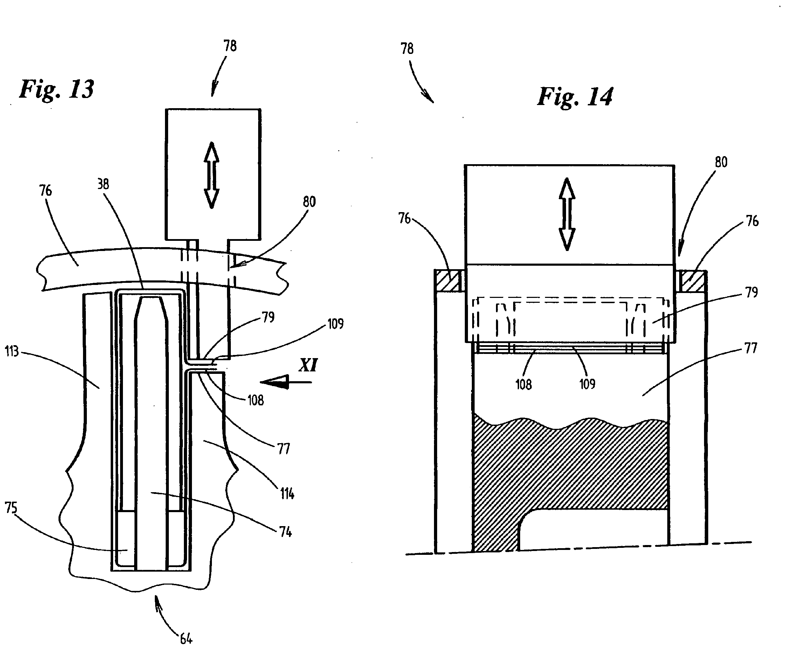

- Fig. 13:: eine Einzelheit der Vorrichtung im Bereich XIII von Fig. 8 in vergrößerter Seitenansicht,
- Fig. 14 :: eine Seitenansicht zur Darstellung gemäß Fig. 13,
- Fig. 15 :: eine Einzelheit der Vorrichtung gemäß Fig. 8 im Bereich XV in vergrößerter Seitenansicht,
- Fig. 16 :: ein Schnitt durch die Vorrichtung entlang Schnittlinie XVI-XVI in Fig. 8 in vergrößertem Maßstab, und

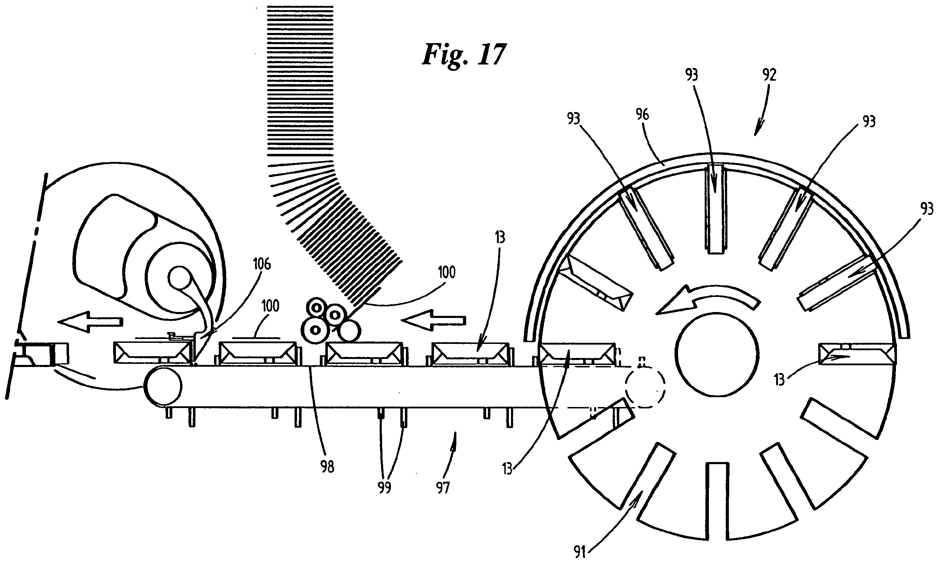

- Fig. 17 :: eine Einzelheit der Vorrichtung gemäß Bereich XVII in Fig. 6 in vergrößerter Seitenansicht.

Die vorliegend dargestellte Packung 10 ist vorrangig für die Aufnahme von Zigaretten bestimmt, wobei eine Anzahl von Zigaretten in Formation zu einer Zigarettengruppe 11 als Packungsinhalt zusammengefasst ist. Im Aufbau besteht die (Zigaretten-)Packung 10 aus einer Außenpackung 12 und einer Innenpackung 13. Die Außenpackung 12 ist im vorliegenden Fall eine Klappschachtel mit standardmäßigem Aufbau, nämlich mit einem (unteren) Schachtelteil 14 und einem (oberen) Deckel 15 sowie gegebenenfalls einem Kragen 16. Die Außenpackung 12 kann auch in anderer Weise ausgebildet sein, insbesondere als shell-and-slide-Packung oder als Kappenschachtel.

Schachtelteil 14 und Deckel 15 bestehen aus einem einstückigen Zuschnitt (nicht gezeigt) mit Bereichen für eine Schachtel-Vorderwand 17, Bodenwand 18, Schachtel-Rückwand 19, Deckel-Rückwand 20, Stirnwand 21 und Deckel-Vorderwand 22. Schachtel-Seitenwände 23 und Deckel-Seitenwände 24 bestehen jeweils aus einander überdeckenden Seitenlappen, sind also doppellagig ausgebildet.

Innerhalb der so ausgebildeten Außenpackung 12 ist eine blockförmige Innenpackung 13 angeordnet, und zwar in der Ausführung als Dichtblock 25. Der Packungsinhalt, insbesondere die Zigarettengruppe 11, ist allseitig von einem Innenzuschnitt 26 aus Folie umgeben, der aufgrund seiner Zusammensetzung vorzugsweise feuchtigkeits- und aromadicht ist. Darüber hinaus ist das Material des Innenzuschnitts 26 thermisch siegelbar, sodass Faltlappen durch Wärme und Druck miteinander verbunden werden können.

Eine Besonderheit des Dichtblocks 25 bzw. des Innenzuschnitts 26 ist eine mehrfach benutzbare, also wiederverschließbare Öffnungshilfe. Diese besteht aus einer Öffnungslasche 27, die eine Entnahmeöffnung freilegt in einer innenliegenden Folie bzw. Folienlage freilegt. Die Öffnungslasche 27 ist vorliegend durch eine U-förmige Schwächungslinie 28, nämlich eine Perforation, eine durchgehende Stanzlinie oder andere geeignete Materialschwächung begrenzt. Beim Öffnen des Dichtblocks 25 wird die Öffnungslasche 27 mit Hilfe eines Betätigungsorgans, nämlich einer Betätigungslasche 29, in die Öffnungsstellung gebracht.

Die Betätigungslasche 29 ist Teil des Innenzuschnitts 26 bzw. Teil einer Außenlage des Innenzuschnitts 26. Die Betätigungslasche 29 ist von einer im Wesentlichen U-förmigen Schwächungs- oder Stanzlinie 30 begrenzt. Die Betätigungslasche 29 ist größer als die Öffnungslasche 27 und überdeckt diese mit einem vorzugsweise an drei Seiten gebildeten (U-förmigen) Verschlussstreifen 31. Dieser liegt an einem die Entnahmeöffnung umgebenden Randstreifen einer Innenlage als Träger der Öffnungslasche 27 an. Die Betätigungslasche 29 ist mindestens im Bereich des Verschlussstreifens 31 mit einem dauerhaft wirkenden Kleber versehen.

Der Zuschnitt für den Dichtblock 25, also der Innenzuschnitt 26, ist durch Faltlinien in Bereiche aufgeteilt für eine Innen-Vorderwand 32, eine Innen-Stirnwand 33 und eine Innen-Rückwand 34. Über die volle Länge des Innenzuschnitts 26 erstrecken sich beidseitig Seitenstreifen zur Bildung von miteinander verbundenen Innen-Seitenlappen 35. An freien Enden des langgestreckten Innenzuschnitts 26 im Bereich der Innen-Rückwand 34 sind Faltlappen 108, 109 gebildet, die sich über die volle Breite des Innenzuschnitts 26 erstrecken. Diese Faltlappen sind in besonderer Weise miteinander zu einer Flossennaht 37 verbunden.

Zum Erfassen der Betätigungslasche 29 ist diese im Bereich der Innen-Vorderwand 32 mittig mit einer Griffzunge 45 versehen. Diese befindet sich in einem klebstofffreien Bereich. Die Griffzunge 45 ist so angebracht, dass sie stets oberhalb der Schachtel-Vorderwand 17 liegt, also frei erfasst werden kann. Weiterhin ist die Griffzunge 45 vorzugsweise gegen die Betätigungslasche 29 umgefaltet und dort mit einem Kleber fixiert. Auf diese Weise lässt sich die Betätigungslasche 29 leichter greifen.

Eine weitere Besonderheit ist die konstruktive Ausbildung des Dichtblocks 25 bzw. der Faltung des Innenzuschnitts 26. Der Innenzuschnitt 25 ist so gefaltet, dass rückseitig, nämlich im Bereich einer Innen-Rückwand 34, überstehende Faltlappen 108, 109 des Innenzuschnitts 26 angeordnet sind unter Bildung der Flossennaht 37. In diesem Bereich kann die thermische Siegelung der Faltlappen 108, 109 ohne Übertragung von Druck und/oder Wärme auf die Enden der Zigaretten übertragen werden. Die quer abstehende Flossennaht 37 wird danach gegen die Innen-Rückwand 34 umgefaltet. Randseitig über den Packungsinhalt überstehende Endbereiche der Flossennaht 37 werden danach zusammen mit dem entsprechenden Faltlappen 110 seitlich in die Ebene der Innen-Seitenwände 35 des Dichtblocks 25 gefaltet. Darüber werden danach die aus der Ebene der Innen-Vorderwand 32 ragenden Faltlappen 111 gelegt und gesiegelt.

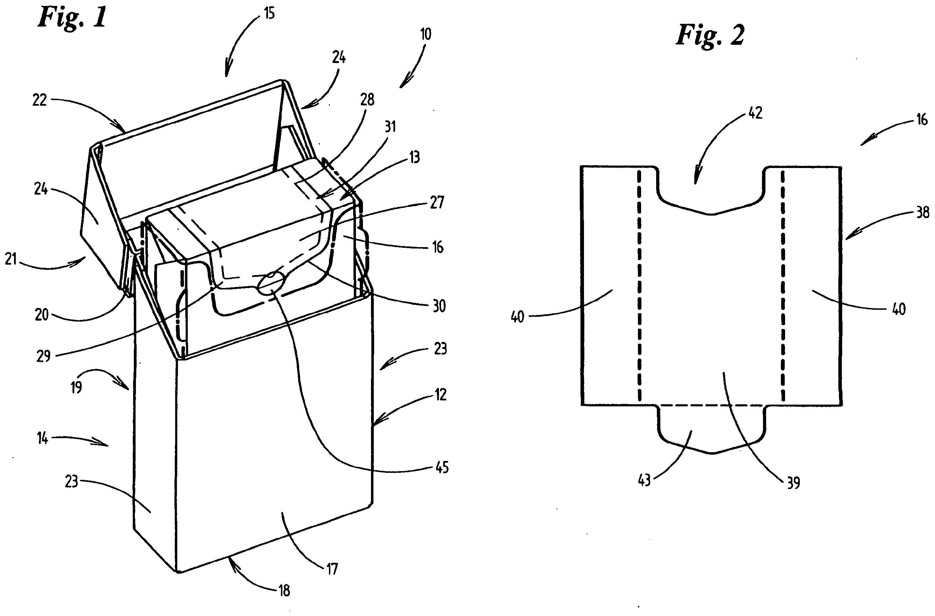

Zum Schutz des Packungsinhalts, nämlich der Zigaretten, beim Siegeln der Seitenlappen im Bereich der Innen-Seitenwände 35 ist innerhalb des Dichtblocks 25 eine Abdeckung angeordnet, die sich mindestens im Bereich der Innen-Seitenwände 35 der Innen-Vorderwand 32 erstreckt. Im Bereich der Innen-Rückwand 34 ist keine Abdeckung vorgesehen. Es handelt sich vorliegend um einen Innenkragen 38 (Fig. 2), der die Zigarettengruppe 11 teilweise umgibt.

Der Innenkragen 38 erstreckt sich bei diesem Ausführungsbeispiel über die volle Länge bzw. Höhe der Zigarettengruppe 11 mit einer Kragen-Vorderwand 39 im frontseitigen Bereich. Kragen-Seitenwände 40 werden gegen seitliche Bereiche der Zigarettengruppe 11 umgefaltet und erstrecken sich im Bereich der Innen-Seitenwände 35, zur Abdeckung der Zigarettengruppe 11 gegen Wärme und Druck. Eine Ausnehmung 42 im Bereich der Kragen-Vorderwand 39 ermöglicht die Entnahme der Zigaretten bei geöffnetem Dichtblock 25. Eine weitere Besonderheit ist ein am unteren Ende der Kragen-Vorderwand 39 gegenüberliegend der Ausnehmung 42 ausgebildeter Fortsatz 43, derart dass der Innenkragen 38 im Wesentlichen abfallfrei aus einer fortlaufenden Materialbahn 54 herausgetrennt werden kann.

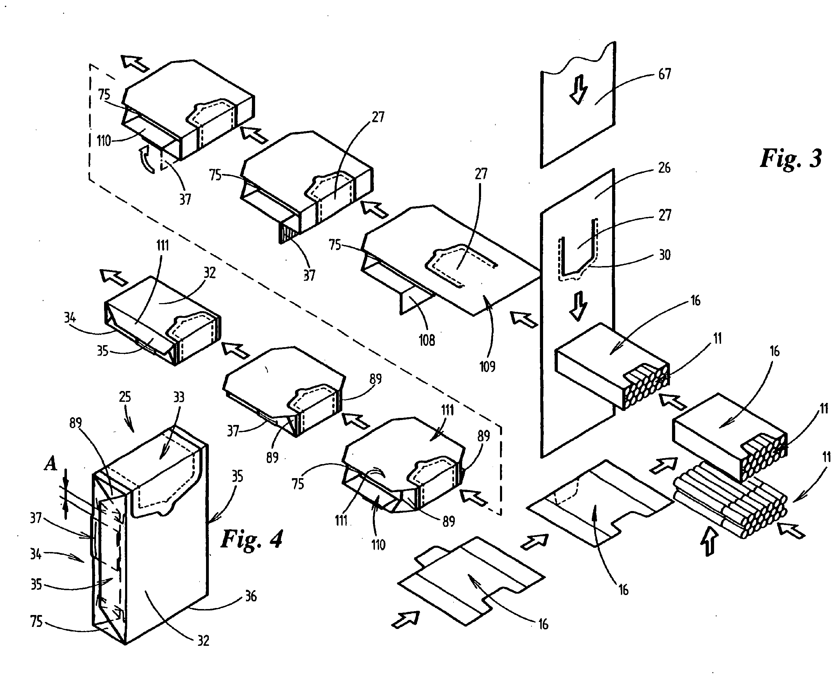

Eine Besonderheit ist das Herstellungsverfahren für den Dichtblock 25 (Fig. 3). Zunächst wird ein Zuschnitt für den Innenkragen 38 in U-Form gefaltet und der Fortsatz 43 in die Ebene der Innen-Bodenwand 36 gelegt und der formierten Zigarettengruppe 11 zugeführt. Danach werden vorbereitete Innenzuschnitte 26 bereitgehalten, nämlich in einer (vertikalen) Querebene zugeführt. Die Zigarettengruppe 11 ist so positioniert, dass Filterenden in Transportrichtung nach hinten weisen. In Verbindung mit Führungen bzw. Faltorganen wird aufgrund des Transports der Innenzuschnitt 26 U-förmig um Zigarettengruppe 11 und Innenkragen 38 herumgefaltet.

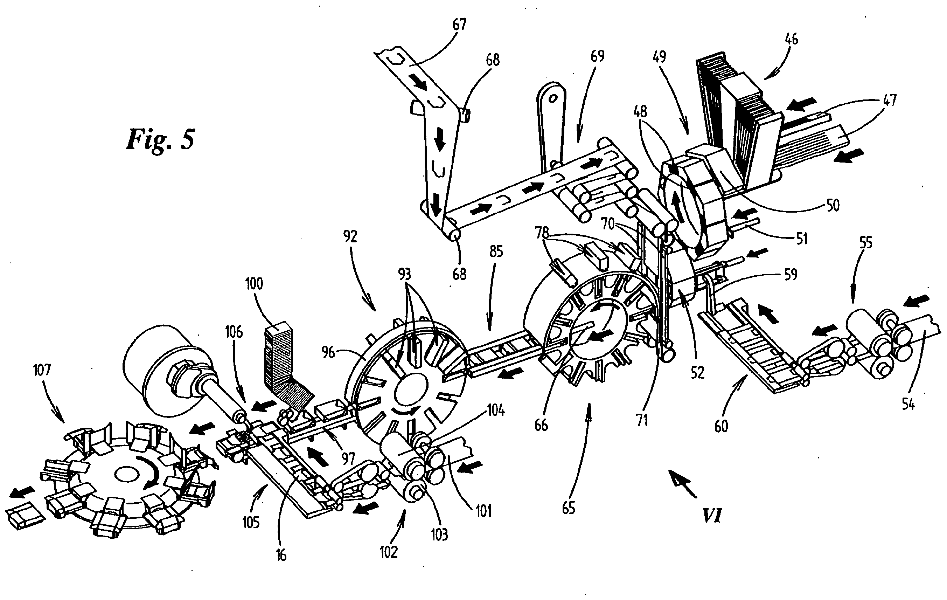

Mit dem ersten U-Faltschritt werden auch frontseitige Ecklappen 75 gefaltet (Fig. 5). Sodann wird die Faltung im Bereich der Innen-Rückwand 34 ausgeführt, nämlich die Herstellung der Flossennaht 37 und deren Siegelung. Als nächstes wird die Flossennaht 37 gegen die Innen-Rückwand 34 umgelegt und rückseitige Ecklappen 89 gefaltet. Danach werden die Faltlappen 110, 111 in den Bereich der Innen-Seitenwände 35 gefaltet. Danach erfolgt die Siegelung der einander überlappenden Faltlappen 110, 111. Der so hergestellte Dichtblock 25 wird in geeigneter Weise in die Außenpackung 12 eingeführt.

Eine Besonderheit besteht darin, dass die Flossennaht 37 mit Abstand zu den mehrfach überlappenden Faltlappen 110, 111 und Ecklappen 75, 89 im Bereich der Innen-Seitenwand 35 angeordnet ist. Es geht dabei insbesondere um den Bereich, in dem sich die Couvert-artig gefalteten Faltlappen 110, 111 und die Ecklappen 75 bzw. 89 überlappen, wodurch eine mehrlagige Konstruktion entsteht. Zu diesem Bereich ist die Flossennaht 37 mit einem Abstand A angeordnet. Dieser Abstand A beträgt vorzugsweise wenige Millimeter, insbesondere 2 bis 3 Millimeter.

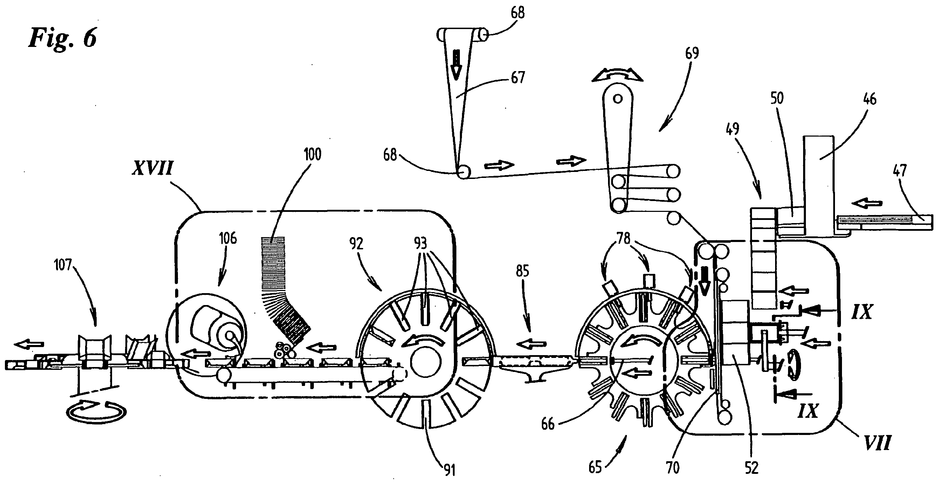

Nachfolgend wird eine bevorzugte Vorrichtung sowie ein Verfahren zur Herstellung der in Fig. 1 gezeigten Packungen 10 erläutert. Fig. 5 und 6 zeigen eine entsprechende Vorrichtung in schematischer räumlicher Darstellung bzw. in Seitenansicht.

Die Zigaretten werden in aufrechten Schächten eines Zigarettenmagazins 46 bereitgehalten und in bekannter Weise durch Stößel-Pakete 47 aus dem Zigarettenmagazin 46 ausgeschoben. Jedes Stößel-Paket 47 erfasst dabei eine Zigarettengruppe 11 von nebeneinander und übereinander liegenden Zigaretten und schiebt diese aus dem Zigarettenmagazin 46 in Taschen 48 eines Revolvers 49. Zwischen Zigarettenmagazin 46 und Revolver 49 ist zudem eine Zigaretten-Weiche 50 angeordnet, die die Zigaretten-Formation bildet.

Durch Stößel-Pakete 47 werden bei jedem zweiten Takt des Revolvers 49 zusammen betrieben, so dass bei jeder Stillstandsphase des Revolvers 49 zwei Taschen 48 befüllt werden. Danach wird der Revolver 49 zwei Positionen weiterbewegt, sodass die nächsten Zigarettengruppen 11 eingeführt werden können.

Der Revolver 49 ist quer zur Ausschubrichtung der Stößel-Pakete 47 angeordnet und dreht um eine horizontale Achse. Die Zigarettengruppen 11 werden entsprechend seitlich in Taschen 48 eingeschoben, die sich in einer oberen Stellung befinden. Ausgeschoben werden die Zigarettengruppen 11 in einer unteren Stellung nach Drehung des Revolvers 49 in mehreren Schritten. Hierzu dient ein Schieber 51, der eine Zigarettengruppe 11 in horizontaler Richtung ausschiebt und in an einem anschließenden Revolver 52 angeordnete Taschen 53 einschiebt. In diesen Taschen 53 befinden sich zu diesem Zeitpunkt bereits die U-förmig gefalteten Innenkragen 38.

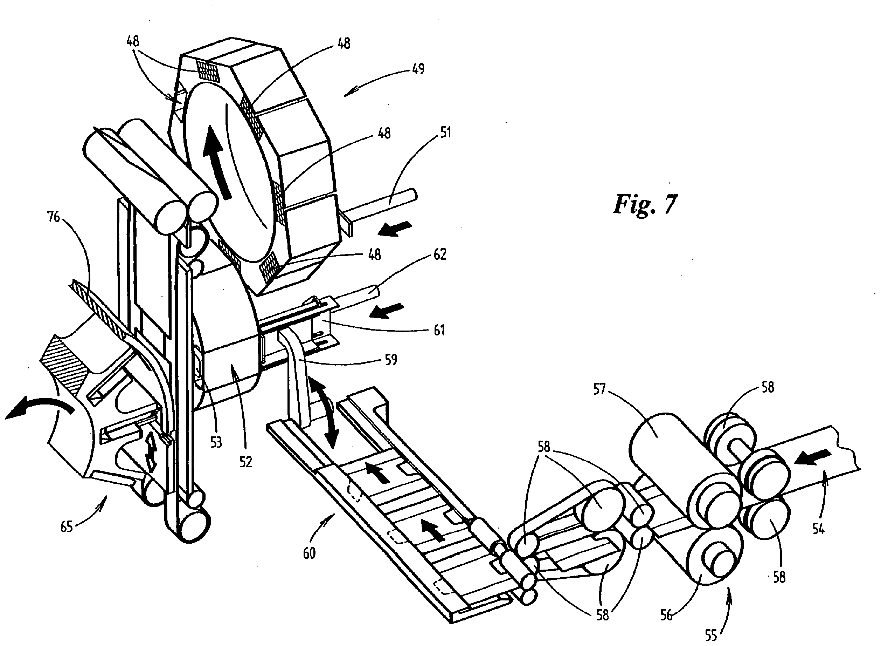

Die Innenkragen 38 werden dem Revolver 52 in einer im Wesentlichen horizontalen Ebene zugeführt. Dies ist in Fig. 7 gezeigt. Die Innenkragen 38 werden in Form einer fortlaufenden Materialbahn 54 entlang einer horizontalen Förderstrecke transportiert und durch eine Schneideinrichtung 55 vereinzelt. Die Schneideinrichtung 55 besteht im vorliegenden Fall aus einer Messerwalze 56 und einer zugehörigen Gegenwalze 57, die die Materialbahn 54 in bekannter Weise zertrennen.

Danach werden die abgetrennten Innenkragen 38 durch aufeinanderfolgende Förderwalzenpaare 58 auf Abstand zueinander gebracht und entlang des Querförderers 60 abgefördert in den Bereich eines Stempels 59, mit dem die Innenkragen 38 nacheinander aus der Transportbahn 60 entnommen und durch Schwenken des Stempels 59 um 90° in eine Formtasche 61 eingedrückt werden. Dabei wird der Innenkragen 38 in die U-Form gefaltet. Während des Transports der Innenkragen 38 entlang des Querförderers 60 wird auch der Fortsatz 43 teilweise umlegt, nämlich quer zur Kragen-Vorderwand 39. Dies kann durch geeignete Faltmittel wie beispielsweise Faltweichen erfolgen.

Der gefaltete Innenkragen 38 wird dann durch einen Schieber 62, der auf die Formtasche 61 einwirkt in eine Tasche 53 des taktweise betriebenen Revolvers 52 gefördert und an diese übergeben.

Nachdem die gefalteten Innenkragen 38 in die Tasche 53 des Revolvers 52 eingeführt sind, wird der Revolver 52 taktweise um zwei Positionen weiterbewegt, sodass die Zigarettengruppen 11 in dieser Station entlang einer horizontalen Ebene in die Taschen 53 eingeschoben und mit den darin bereitgehaltenen Innenkragen 38 vereinigt werden können. Nach weiterer Drehung des Revolvers 52 um 180° kann die Zigarettengruppe 11 mit darumgelegtem Innenkragen 38 in horizontaler Ebene ausgeschoben werden. Hierzu dient ein weiterer Schieber 63.

Mit Hilfe des Schiebers 63 werden die Zigarettengruppen 11 mit darumgelegtem Innenkragen 38 in Taschen 64 eines anschließenden Faltrevolvers 65 eingeschoben. Auch der Faltrevolver 65 dreht um eine horizontale Achse und ist taktweise angetrieben wie der Revolver 52. Der Faltrevolver 65 ist trommelartig ausgebildet mit einem Schieber 66 zum Ausschub von Innenpackungen 13. Faltrevolver 65 und Revolver 52 sind in um 90° zueinander versetzten Ebenen angeordnet, wobei zur Übergabe der Zigarettengruppen 11 jeweils eine radial angeordneten Tasche 64 fluchtend mit einer Tasche 53 angeordnet ist.

Während der Übergabe der Zigarettengruppen 11 mit darumgewickeltem Innenkragen 38 vom Revolver 52 auf den Faltrevolver 65 wird der Innenzuschnitt 26 zugeführt und um die Zigarettengruppe 11 und den Innenkragen 38 herumgewickelt.

Der Innenzuschnitt 26 wird von oben zugeführt, nämlich in Form einer fortlaufenden Materialbahn 67, die über mehrere Umlenkrollen 68 in den Bereich eines Pendelspeichers 69 geführt wird. Im Anschluss an den Bereich des Pendelspeichers 69 werden einzelne Innenzuschnitte 26 aus der Materialbahn herausgetrennt (nicht im Detail gezeigt). Die vereinzelten Innenzuschnitt 26 werden dann randseitig durch zwei im Abstand angeordnete Saugförderer 70 übergeben und im Förderweg der Zigarettengruppen 11 bereitgehalten. Die Saugförderer 70 sind in einem derartigen Abstand angeordnet, dass die Zigarettengruppen 11 zwischen den beiden Saugförderern 70 bzw. Fördertrumen 71 derselben hindurchbewegt werden können unter Mitnahme des Innenzuschnitts 26. Dabei wird der Innenzuschnitt 26 U-förmig um die Zigarettengruppe 11 mit Innenkragen 38 herumgelegt. Die Innenkragen 38 werden mittels Unterdruck an den Fördertrumen 71 des Saugförderers 70 gehalten.

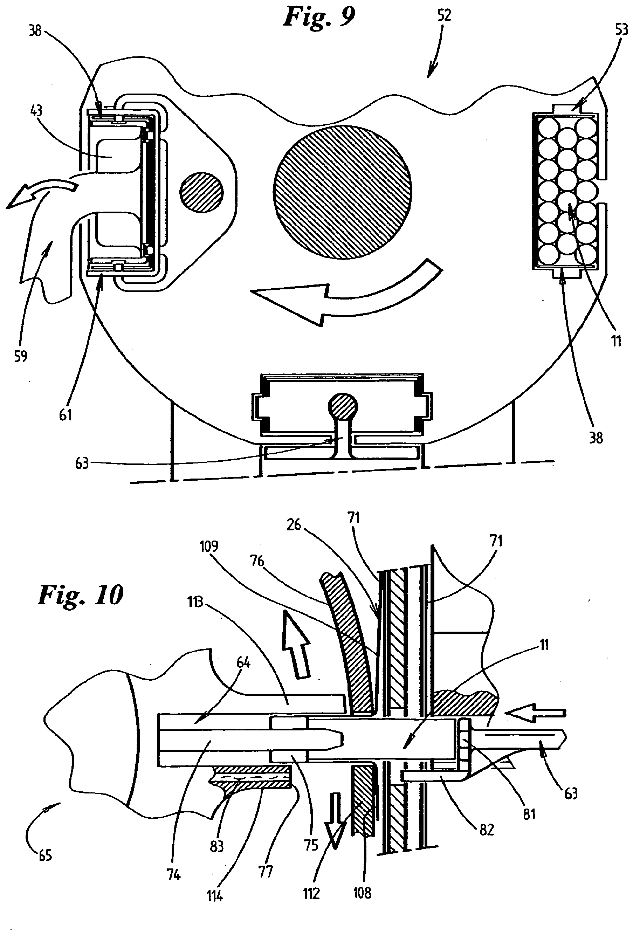

Der Faltrevolver 65 ist taktweise angetrieben und verfügt über eine Anzahl von radial gerichteten Taschen 64 zur Aufnahme eines teilweise in den Innenzuschnitt 26 eingefüllten Zigarettengruppe 11 mit Innenkragen 38. Seitlich an den Taschen 64 sind Faltfinger 74 angeordnet, die ebenfalls radial ausgerichtet sind und beidseitig der Innen-Stirnwand 33 über die Zigarettengruppe 11 hinausstehende Ecklappen 75 der Innen-Stirnwand 33 gegen die Kragen-Seitenwände 40 legen, während die Zigarettengruppe 11 mit dem Innenzuschnitt 26 in die Tasche 64 eingeschoben wird (Fig. 10).

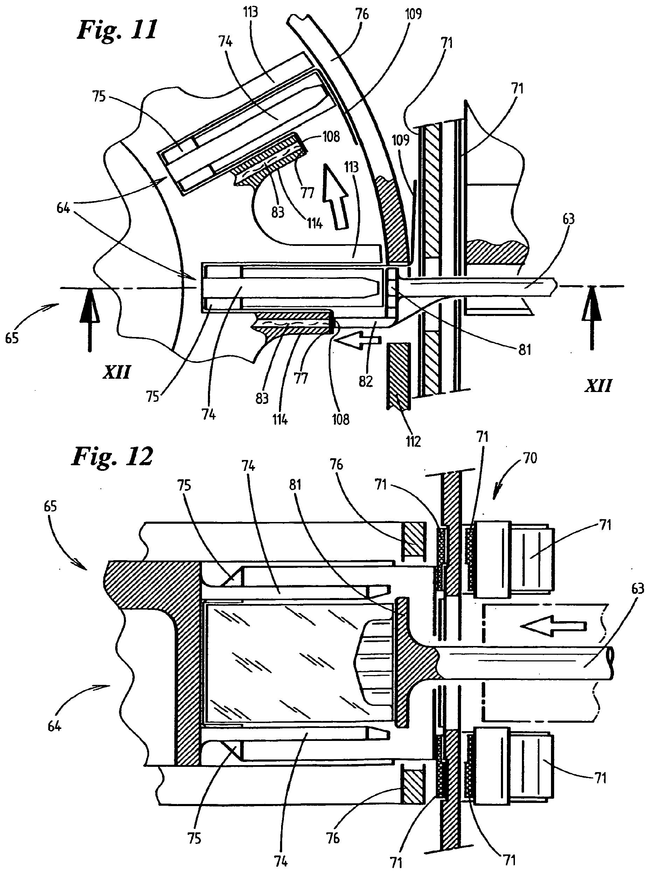

Eine Besonderheit besteht dabei darin, dass der Schieber 63 eine aufrechte Schieberplatte 81 aufweist, die zur Anlage an der Innen-Stirnwand 33 der Innenpackung 13 bestimmt ist. Weiterhin ist unterhalb der Schieberplatte 81 eine in Förderrichtung vorstehende Schiebemase 82 ausgebildet. Die Schiebemase 82 erstreckt sich im Bereich der Innen-Rückwand 34 und sorgt dafür, dass ein unterer Faltlappen 108 des Innenzuschnitts 26 für die Flossennaht 37 an eine jeder Tasche 64 zugeordneten Siegelleiste 77 mit mehreren voneinander beabstandeten Saugkanälen 83 angelegt wird (Fig. 11). Die Schiebemase 82 steht soweit gegenüber der Schieberplatte 81 vor, dass ein Randbereich des Faltlappens 108 gegen die Siegelleiste 77 der Tasche 64 gedrückt wird, wo er mittels Unterdruck gehalten wird.

Im Bereich der vorstehend beschriebene Einschubstation ist eine Außenführung 76 am Umfang des Faltrevolvers 65 angeordnet, die dazu führt, dass ein anfangs radial aus der Tasche 64 herausstehender Faltlappen 109 zur Bildung der Flossennaht 37 gegen den Umfang des Faltrevolvers 65 gelegt wird, sobald der Faltrevolver 65 eine Position weitergedreht wird. Auf diese Weise befindet sich ein Faltlappen 109 am Umfang des Faltrevolvers 65 seitlich neben der Zigarettengruppe 11 und ein anderer Faltlappen 108 an der Siegelleiste 77 der jeweiligen Tasche 64.

In Verlängerung der Außenführung 76 ist zudem im Bereich der Einschubstation eine in vertikaler Richtung bewegliche Gegenführung 102 angeordnet. Die Gegenführung 102 dient dazu zusammen mit dem unteren freien Ende der Außenführung 76 ein Mundstück zu bilden, durch das die Zigarettengruppe 11 mit dem Innenzuschnitt 26 hindurchgeführt wird. Durch die Gegenführung 102 und die Außenführung 76 wird der Innenzuschnitt 26 gegen die Zigarettengruppe 11 bzw. den Kragen 18 gelegt. Die Gegenführung 102 und die Außenführung 76 werden zudem in einem solchen Abstand zueinander positioniert, dass der Innenzuschnitt 26 gegen die Zigarettengruppe 11 bzw. den Kragen 18 gedrückt wird. Durch die entstehende Reibung wird verhindert, dass sich der Innenzuschnitt 26 beim Einschieben gegenüber der Zigarettengruppe 11 verschiebt, insbesondere schräg stellt oder entgleitet (Fig. 10). Diese Maßnahme steht damit im Zusammenhang, dass Taschenwände 113, 114 der Tasche 64 eine unterschiedliche Länge aufweisen. Eine Taschenwand 113 erstreckt sich über die volle Länge der Zigarettengruppe 11, wohingegen die gegenüberliegende Taschenwand 114 kürzer ist und die Siegelleiste 77 aufweist: Entsprechend kommt der Innenzuschnitt 26 beim Einschieben zunächst in Kontakt mit der längeren Taschenwand 113 und könnte sich dabei verschieben, wenn nicht der Innenzuschnitt 26 gegen die Zigarettengruppe 11 bzw. den Kragen 18 gedrückt würde.

Nach dem Einschieben der Zigarettengruppe und des Kragens 18 in die Tasche 64 wird die Gegenführung 102 weiter von der Außenführung 76 beabstandet, um den Durchtritt des Schiebers 63 zu ermöglichen (Fig. 11).

Eine weitere Besonderheit besteht darin, dass zunächst die Flossennaht 37 im Bereich der Innen-Rückwand 34 gesiegelt wird und erst danach die Faltlappen 110, 111 im Bereich der Innen-Seitenwände 35.

Die Siegelung der Flossennaht 37 erfolgt in drei Siegelstationen 78 während des taktweisen Transports der Innenpackungen 13 auf dem Faltrevolver 65. In den Siegelstationen 78 ist jeweils ein Siegelorgan beispielsweise eine beheizbare Siegelbacke 79 am Umfang des Faltrevolvers 65 angeordnet. Die Siegelbacke 79 kann durch einen nicht gezeigten Antrieb in radialer Richtung zum Faltrevolver 65 bewegt werden, um die beiden Faltlappen 108, 109 des Innenzuschnitts 26 für die Flossennaht 37 durch Druck und Hitze zu siegeln. Dabei wird die Siegelbacke 79 durch eine Ausnehmung 80 in der Außenführung 76 bewegt unter Mitnahme des zweiten Faltlappens 109 für die Flossennaht 37 gegen die Siegelleiste 77. Nach dem (teilweisen) Siegeln der Flossennaht 37 wird die Siegelbacke 79 von der Siegelleiste 77 beabstandet, sodass der Faltrevolver 65 eine Station weiterbewegt werden kann.

Im vorliegenden Ausführungsbeispiel weist der Faltrevolver 65 zwölf Taschen 64 auf. Die drei Siegelstationen 78 befinden sich in einer 11, 12 und 1 Uhr-Position. In jeder Siegelstation 78 werden die Faltlappen 108, 109 des Innenzuschnitts 26 im Bereich der Flossennaht 37 gesiegelt, sodass insgesamt eine ausreichend dichte bzw. feste Verbindung gegeben ist. Je nach Umlaufzeiten auf dem Faltrevolver 65 kann auch eine größere oder eine geringere Anzahl von Siegelstationen 78 vorgesehen sein.

Während der Herstellung der Flossennaht 37 sind die Faltlappen 110, 111 des Innenzuschnitts 26 für die Innen-Seitenwände 35 noch nicht gefaltet und stehen im Wesentlichen seitlich ab. Die Faltung dieser Seitenlappen erfolgt erst nach Ausschub der Innenpackungen 13 aus dem Faltrevolver 65.

In einer Ausschubstation des Faltrevolvers 65 in einer 9-Uhr-Stellung werden die teilweise gesiegelten Innenpackungen 13 mit der Flossennaht 37 im Bereich der Innen-Rückwand 34 nach oben weisend aus dem Faltrevolver 65 ausgeschoben und an einen horizontalen Förderer 85 übergeben. Dies erfolgt durch den im Inneren des trommelartig ausgebildeten Faltrevolvers 65 angeordneten Schieber 66. Dieser schiebt die Innenpackungen 13 in den Bereich des anschließenden Förderers 85. Dabei wird die Flossennaht 37 durch ein unteres Ende der Außenführung 76 entgegen der Förderrichtung gegen die Innen-Rückwand 34 gelegt bzw. gefaltet.

Auch der Förderer 85 ist taktweise angetrieben und verfügt über seitliche, im Querschnitt C-förmige Führungen 86 in denen die mit Abstand zueinander angeordneten Innenpackungen 13 taktweise entlang des horizontalen Förderers 85 verschoben werden können. Hierzu dient ein Schieber 87, der durch ein nicht gezeigten Antrieb jeweils zwei Innenpackungen 13 erfasst und eine Position weitertransportiert. Der Schieber 87 weist oberseitig zwei Vertiefungen 88 auf, die jeweils zur Aufnahme einer Innenpackung 13 bemessen sind. Als weitere Besonderheit weisen die Führungen 86 im Einlaufbereich einen Faltfinger 90 auf, zum beiderseitigen Umlegen der weiteren Ecklappen 89.

Danach werden während des Transports der Innenpackung 13 die Faltlappen 110, 111 im Bereich der Innen-Seitenwände 35 gefaltet. Dies kann durch nicht gezeigte Faltweichen erfolgen, die aus dem Stand der Technik grundsätzlich bekannt ist. Eine weitere Besonderheit besteht aber in der Abfolge der Faltung. Zunächst werden nämlich die im Bereich der Innen-Rückwand 34 seitlich abstehenden Faltlappen 110, die auch die Flossenfaltung 37 aufweisen, gegen den Packungsinhalt gefaltet und danach die im Bereich der Innen-Vorderwand 32 seitlich abstehenden Faltlappen 111. Auf diese Weise wird die couvert-artige Faltung während des Transports der Innenpackung 13 auf dem Förderer 85 komplettiert und die Innenpackung 13 dann durch den Schieber 87 in Taschen 91 eines anschließenden Siegelrevolvers 92 eingeführt. Nach Übergabe der teilweise gefalteten Innenpackung 13 befindet sich diese in einer Konfiguration gemäß Fig. 4 auf dem taktweise angetriebenen Siegelrevolver 92.

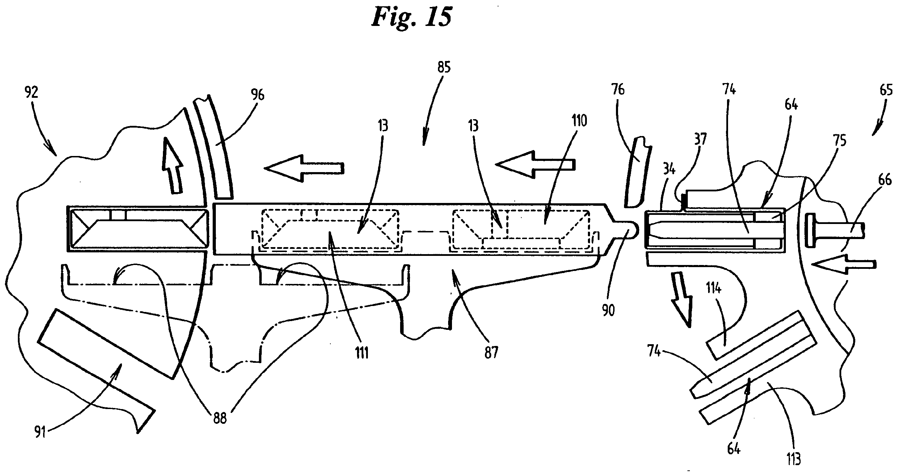

Die Taschen 91 des um eine horizontale Achse drehenden Siegelrevolvers 92 sind radial gerichtet und dienen zur Aufnahme jeweils einer Innenpackung 13. In einer Einschubstation des Siegelrevolvers 92 gemäß Fig. 15 ist eine Tasche 91 zur Aufnahme der Innenpackung 13 in Verlängerung des Förderers 85 fluchtend mit diesem ausgerichtet. Nach der Siegelung der Innenpackung 13 im Bereich der Innen-Seitenwände 35 während des Umlaufs auf dem Siegelrevolver 92 werden die Packungen in einer der Einschubstation gegenüberliegenden Ausschubstation ausgeschleust. Die Siegelung erfolgt also innerhalb einer Drehung des Siegelrevolvers 92 um 180°.

Im vorliegenden Fall sind vier Siegeleinrichtungen 93 vorgesehen, nämlich in einer elf-Uhr-, zwölf-Uhr-, ein-Uhr- und zwei-Uhr-Position. Die Siegeleinrichtungen 93 bestehen jeweils aus zwei Siegelbacken 94 die von beiden Seiten vollflächig gegen die Innen-Seitenwände 35 der Innenpackung 13 gedrückt werden können. Während der Stillstandsphase des Siegelrevolvers 92 findet entsprechend die Siegelung der Faltlappen 110, 111 in vier aufeinander folgenden Stationen statt. Es versteht sich, dass sowohl eine größere als auch eine geringere Anzahl von Siegeleinrichtungen 93 vorgesehen sein kann. Die Siegeleinrichtungen 93 können auch an anderen Positionen angeordnet sein.

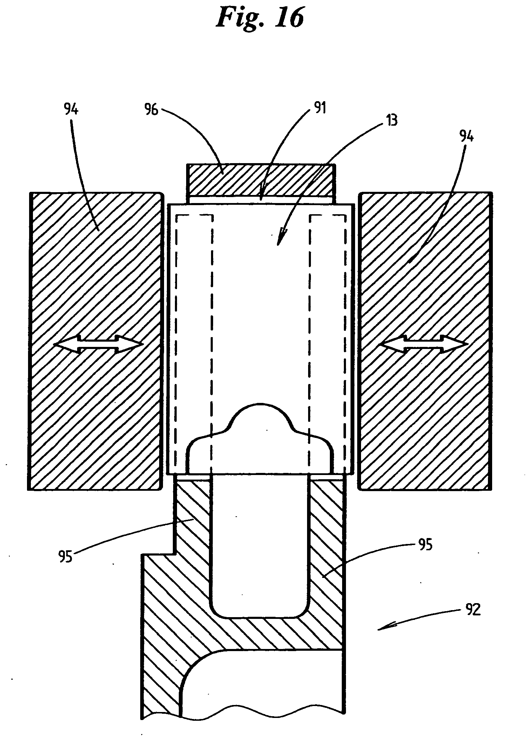

Wie insbesondere Fig. 16 zeigt, verfügt der Siegelrevolver 92 über zwei in parallelen Ebenen angeordnete Revolverscheiben 95, die mit Abstand zueinander angeordnet sind. In den Revolverscheiben 95 sind Ausnehmungen angeordnet zur Bildung der radialen Taschen 91. Zum Einschieben der Innenpackungen 13 in die Taschen 91 greift der Schieber 87 zwischen die beiden Revolverscheiben 95 ein. Weiterhin ist eine Außenführung 96 entlang des Transportwegs der Innenpackungen 13 am Umfang des Siegelrevolvers 92 vorgesehen. Die Siegelbacken 94 werden zum Siegeln in horizontaler Richtung gegen die Innen-Seitenwände 35 bewegt bzw. nach dem Siegeln wieder entfernt zum weiteren Transport des Siegelrevolvers 92 um eine Position.

Der Ausschub der vollständig gesiegelten Innenpackungen 13 erfolgt in der bereits genannten Ausschubstation. Dort werden die Packungen durch einen horizontalen Abförderer 97 erfasst, der wie der Schieber 87 zwischen die Revolverscheiben 95 eingreift, um eine Packung aus einer Tasche 91 zu entnehmen. Auf dem Abförderer 97 liegen die Innenpackungen 13 mit der Innen-Rückwand 34 nach unten weisend auf einem Fördertrum 98 zwischen Mitnehmern 99 desselben.

Im Bereich Abförderers 97 können Coupons 100 oder andere Druckträger auf die Innen-Vorderwände 32 der Dichtblöcke 25 aufgelegt werden. Hierzu geeignete Couponaufleger und Magazine zum Bereithalten der Coupons 100 sind aus dem Stand der Technik bekannt.

Weiterhin vorgesehen ist eine Einheit zum Vereinzeln, Zuführen und Auflegen vom Kragen 16 zu den Dichtblöcken 25. Fig. 5 zeigt hierzu die Zuführung einer fortlaufenden Materialbahn 101 sowie eine daran anschließende Schneideinrichtung 102 mit Messerwalze 103 und Gegenwalze 104 zum Abtrennen der Kragen 16 aus der Materialbahn 101. Die vereinzelten Kragen 16 werden nachfolgend auf Abstand zueinander gebracht und dann an einen Querförderer 105 übergeben, der die Kragen 16 in Richtung des Förderers 97 transportiert bis oberhalb der Dichtblöcke 25. Dort werden sie von einem Krageneinschieber 106 auf die Dichtblöcke 25 aufgelegt. Die Vorrichtung kann ich diesem Bereich gemäß EP 0 496 261 B1 oder EP 0 667 232 B1 aus dem Hause der Anmelderin ausgebildet sein.

Im Anschluss an die Zuführung der Kragen 16 werden die Dichtblöcke 25 an einen Faltrevolver 107 übergeben, in dem vorgefaltete Zuschnitte für die Außenpackung 12 bereitgehalten werden. Die Packung 10 wird dann auf dem Faltrevolver 107 in bekannter Weise komplettiert.

Es versteht sich, dass die Zuführung von Coupons 100 optional ist und nicht zwingend vorhanden sein muss.

**Bezugszeichenliste**

| | | | |
|---|---|---|---|
| 10 | Packung | 39 | Kragen-Vorderwand |
| 11 | Zigarettengruppe | 40 | Kragen-Seitenwand |
| 12 | Außenpackung | 42 | Ausnehmung |
| 13 | Innenpackung | 43 | Fortsatz |
| 14 | Schachtelteil | 44 | Faltlinie |
| 15 | Deckel | 45 | Griffzunge |
| 16 | Kragen | 46 | Zigarettenmagazin |
| 17 | Schachtel-Vorderwand | 47 | Stößel-Paket |
| 18 | Bodenwand | 48 | Tasche |
| 19 | Schachtel-Rückwand | 49 | Revolver |
| 20 | Deckel-Rückwand | 50 | Zigaretten-Weiche |
| 21 | Stirnwand | 51 | Schieber |
| 22 | Deckel-Vorderwand | 52 | Revolver |
| 23 | Schachtel-Seitenwand | 53 | Tasche |
| 24 | Deckel-Seitenwand | 54 | Materialbahn |
| 25 | Dichtblock | 55 | Schneideinrichtung |
| 26 | Innenzuschnitt | 56 | Messerwalze |
| 27 | Öffnungslasche | 57 | Gegenwalze |
| 28 | Schwächungslinie | 58 | Förderwalzenpaar |
| 29 | Betätigungslasche | 59 | Stempel |
| 30 | Stanzlinie | 60 | Querförderer |
| 31 | Verschlussstreifen | 61 | Formtasche |
| 32 | Innen-Vorderwand | 62 | Schieber |
| 33 | Innen-Stirnwand | 63 | Schieber |
| 34 | Innen-Rückwand | 64 | Tasche |
| 35 | Innen-Seitenwand | 65 | Faltrevolver |
| 36 | Innen-Bodenwand | 66 | Schieber |
| 37 | Flossennaht | 67 | Materialbahn |
| 38 | Innenkragen | 68 | Umlenkrolle |
| 69 | Pendelspeicher | 105 | Querförderer |
| 70 | Saugförderer | 106 | Krageneinschieber |
| 71 | Fördertrum | 107 | Faltrevolver |
| 73 | Schieberplatte | 108 | Faltlappen |
| 74 | Faltfinger | 109 | Faltlappen |
| 75 | Ecklappen | 110 | Faltlappen |
| 76 | Außenführung | 111 | Faltlappen |
| 77 | Siegelleiste | 112 | Gegenführung |
| 78 | Siegelstation | 113 | Taschenwand |
| 79 | Siegelbacke | 114 | Taschenwand |
| 80 | Ausnehmung | | |
| 81 | Schieberplatte | A | Abstand |
| 82 | Schiebernase | | |
| 83 | Saugkanal | | |
| 85 | Förderer | | |
| 86 | Führung | | |
| 87 | Schieber | | |
| 88 | Vertiefung | | |
| 89 | Ecklappen | | |
| 90 | Faltfinger | | |
| 91 | Tasche | | |
| 92 | Siegelrevolver | | |
| 93 | Siegeleinrichtung | | |
| 94 | Siegelbacke | | |
| 95 | Revolverscheibe | | |
| 96 | Außenführung | | |
| 97 | Abförderer | | |
| 98 | Fördertrum | | |
| 99 | Mitnehmer | | |
| 100 | Coupon | | |
| 101 | Materialbahn | | |
| 102 | Schneideinrichtung | | |
| 103 | Messerwalze | | |
| 104 | Gegenwalze | | |

## Patentansprüche

1. Verfahren zum Herstellen von Packungen (10) für Zigaretten, mit einer Außenpackung (12), vorzugsweise in der Ausführung als Klappschachtel, und einer Innenpackung (13) als Dichtblock (25) mit einer den Packungsinhalt, insbesondere eine Zigarettengruppe (11), umgebenden Innenzuschnitt (26) aus, vorzugsweise aroma- und feuchtigkeitsdichter, thermisch siegelbarer Folie, die im Bereich einer Innen-Stirnwand (33) eine mehrfach benutzbare Öffnungshilfe und im Bereich von Seitenwänden der Innenpackung (13) durch thermisches Siegeln miteinander verbundene Faltlappen aufweist, wobei der Packungsinhalt durch den bereitgehaltenen Innenzuschnitt (26) gefördert wird unter teilweiser Einhüllung des Packungsinhalts in den Innenzuschnitt (26), und dass Faltlappen (108, 109) im Bereich einer Innen-Rückwand (34) des Innenzuschnitts (26) durch thermisches Siegeln zu einer Flossennaht (37) miteinander verbunden werden, und dass Endbereiche der Flossennaht (37) derart in die Ebene von Innen-Seitenwänden (35) umgefaltet werden, dass sie mit Abstand (A) zu Bereichen von einander mehrfach überdeckenden Faltlappen im Bereich der Innen-Seitenwände (35) angeordnet sind, **dadurch gekennzeichnet, dass**
a) der Packungsinhalt durch den bereitgehaltenen Innenzuschnitt (26) in eine Tasche eines Faltrevolvers (65) gefördert wird, und dass die Faltlappen (108, 109) im Bereich der Innen-Rückwand (34) des Innenzuschnitts (26) auf dem Faltrevolver (65) durch thermisches Siegeln zu einer Flossennaht (37) miteinander verbunden werden, insbesondere in mehreren am Umfang des Faltrevolvers (65) angeordneten und aufeinander folgenden Siegelstationen (78) während einer Stillstandsphase des taktweise angetriebenen Faltrevolvers (65),
b) nach dem Siegeln der Flossennaht (37) im Bereich der Innen-Rückwand (34) und dem Umfalten der Flossennaht (37) gegen die Innen-Rückwand (34) Faltlappen (110, 111) des Innenzuschnitts (26) in den Bereich der Innen-Seitenwände (35) unter Überdeckung von Ecklappen (75, 89) des Innenzuschnitts (26) gefaltet und miteinander versiegelt werden, wobei zunächst die Ecklappen (75, 89) in die Ebene der Innen-Seitenwände (35) gefaltet werden und danach Faltlappen (110) der Innen-Rückwand (34) mit Endbereichen der Flossennaht (37) sowie weiterhin Faltlappen (111) der Innen-Vorderwand (32) gefaltet werden, und dass die Innen-Seitenwände (35) danach vollflächig gesiegelt werden,
c) dem Packungsinhalt vor der Zuführung des Innenzuschnitts (26) ein Innenkragen (38) zugeführt wird, der in einem Revolver (52) U-förmig positioniert wird und in den dann die Zigarettengruppe (11) als Packungsinhalt eingeschoben wird und dass der Packungsinhalt mit Innenkragen (38) aus dem Revolver (52) ausgefördert und durch den bereitgehaltenen Innenzuschnitt (26) in den Faltrevolver (65) eingefördert wird.

2. Verfahren nach Anspruch 1 oder einem der weiteren vorhergehenden Ansprüche, **dadurch gekennzeichnet, dass** im Bereich des Faltrevolvers (65) zunächst die Flossennaht (37) gebildet wird und dass danach im Bereich eines an den Faltrevolver (65) anschließenden, horizontal gerichteten Förderers (85) die Couvert-artige Faltung der Faltlappen (110, 111) im Bereich der Innen-Seitenwände (35) erfolgt und dass danach auf einem an den Förderer (85) anschließenden Siegelrevolver (92) der Dichtblock (25) komplettiert wird durch Siegelung der einander überlappenden Ecklappen (75, 89) und Faltlappen (110, 111) im Bereich der Innen-Seitenwände (35).

3. Verfahren nach Anspruch 1 oder einem der weiteren vorhergehenden Ansprüche, **dadurch gekennzeichnet, dass** der Innenzuschnitt (26) dem Faltrevolver (65) von oben zugeführt wird wobei der Innenkragen (38) dem Revolver (52) seitlich zugeführt wird, insbesondere jeweils als fortlaufende Materialbahn (54, 67). die nachfolgend in einzelne Zuschnitte aufgetrennt wird.

4. Verfahren nach Anspruch 3, **dadurch gekennzeichnet, dass** der Innenzuschnitt (26) beim Einfördern des Packungsinhalts mit Innenkragen (38) in eine Tasche (64) des Faltrevolvers (65) gegen den Packungsinhalt bzw. den Innenkragen (38) gelegt wird, vorzugsweise durch eine am Umfang des Faltrevolvers (65) angeordnete Außenführung (76) in Verbindung mit einer Gegenführung (112) die zusammen ein Mundstück für den Packungsinhalt mit Innenkragen (38) bilden.

5. Verfahren nach Anspruch 4 oder einem der weiteren, vorhergehenden Ansprüche, **dadurch gekennzeichnet, dass** ein Faltlappen (108) des Innenzuschnitts (26) für die Flossennaht (37) beim Zuführen des Packungsinhalts in eine Tasche (64) des Faltrevolvers (65) durch eine an einem Schieber (63) für den Packungsinhalt ausgebildete Schiebernase (82) gegen eine der Tasche (64) zugeordnete Siegelleiste (77) gelegt und dort, insbesondere durch wenigstens einen Saugkanal (83), durch Unterdruck gehalten wird, wobei vorzugsweise die Siegelleiste seitlich neben der Tasche (64) und mit Abstand zum Umfang des Faltrevolvers (65) angeordnet ist, und dass ein weiterer Faltlappen (109) für die Flossennaht vom Umfang des Faltrevolvers (65) durch eine Siegelbacke (79) einer Siegelstation (78) zur Siegelleiste (77) geführt und mit dem ersten Faltlappen (108) durch Aufbringen von Druck und Wärme zur Flossennaht (37) gesiegelt wird.

6. Verfahren nach Anspruch 4, 5 oder einem der weiteren vorhergehenden Ansprüche, **dadurch gekennzeichnet, dass** während der Herstellung der Packungen die Höhe des Mundstücks verändert wird, nämlich einerseits zum Zuführen des Packungsinhalts mit Innenzuschnitt (26) zur Tasche (64) verringert wird und andererseits vergrößert wird damit der Schieber (63) zwischen Gegenführung (112) und Oberführung (76) hindurchbewegt werden kann

7. Vorrichtung zum Herstellen von Packungen (10) für Zigaretten, mit einer Außenpackung (12), vorzugsweise in der Ausführung als Klappschachtel, und einer Innenpackung (13) als Dichtblock (25) mit einer den Packungsinhalt, insbesondere eine Zigarettengruppe (11), umgebenden Innenzuschnitt (26) aus, vorzugsweise aroma- und feuchtigkeitsdichter, thermisch siegelbarer Folie, die im Bereich einer Innen-Stirnwand (33) eine mehrfach benutzbare Öffnungshilfe und im Bereich von Innen-Seitenwänden (35) sowie einer Innen-Rückwand (34) durch thermisches Siegeln miteinander verbundene Faltlappen aufweist, wobei Endbereiche der Flossennaht (37) mit Abstand (A) zu Bereichen von einander mehrfach überdeckenden Faltlappen im Bereich der Innen-Seitenwände (35) angeordnet sind, **gekennzeichnet durch**
a) einen Faltrevolver (65) mit Taschen (64) zur Aufnahme jeweils eines Packungsinhalts mit darumgelegtem Innenzuschnitt (26) und durch vorzugsweise mehrere am Umfang des Faltrevolvers (65) angeordnete Siegelstationen (78) zum Siegeln von Faltlappen auf dem Faltrevolver (65) im Bereich einer Innen-Rückwand (34) des Innenzuschnitts (26) in Art einer Flossennaht (37) während einer Stillstandsphase des taktweise angetriebenen Faltrevolvers (65) und mit einem oder mehreren Faltmitteln zum Falten der Flossennaht (37) gegen die Innen-Rückwand (34) und die Innen-Seitenwände (35),
b) wobei die oder jede Siegelstation (78) eine den Taschen (64) des Faltrevolvers (65) zugeordnete Siegelleiste (77) sowie eine am Umfang des Faltrevolvers (65) ortsfest angeordnete Siegelbacke (79) aufweist, wobei die Siegelbacke (79) während der Drehphase des Faltrevolvers (65) zur Siegelleiste (77) beabstandbar ist und zum Siegeln des Flossennaht (37) zur Anlage an der Siegelleiste (77) bringbar ist, insbesondere durch Bewegung in radialer Richtung im Bezug auf den Umfang des Faltrevolvers (65), und wobei die Siegelleiste (77) mit Abstand zum Umfang des Faltrevolvers (65) seitlich neben der Tasche (64) angeordnet ist,
c) wobei dem Packungsinhalt vor der Zuführung des Innenzuschnitts (26) ein Innenkragen (38) zuführbar ist, der in einem Revolver (52) U-förmig positionierbar ist und in den dann die Zigarettengruppe (11) als Packungsinhalt einschiebbar ist und wobei der Packungsinhalt mit Innenkragen (38) aus dem Revolver (52) ausförderbar und durch den bereitgehaltenen Innenzuschnitt (26) in den Faltrevolver (65) einförderbar ist.

8. Vorrichtung nach Anspruch 7, **dadurch gekennzeichnet, dass** mehrere am Umfang des Faltrevolvers (65) angeordnete Siegelstationen (78) zum Siegeln von Faltlappen des Innenzuschnitts (26) im Bereich einer Innen-Rückwand (34) des Innenzuschnitts (26) in Art einer Flossennaht (37) vorgesehen sind, und dass die soweit teilweise gesiegelte Innenpackung (13) entlang einer an den Faltrevolver (65) anschließenden horizontalen Förderstrecke (85) transportierbar sind, in deren Bereich seitliche Faltlappen im Bereich der Innen-Seitenwände (35) Couvert-artig faltbar sind, und dass die soweit teilweise gesiegelte und komplett gefaltete Innenpackung (13) in eine Tasche (91) eines anschließenden Siegelrevolvers (92) einführbar ist, und dass am Umfang des Siegelrevolvers (92) Siegelstationen (93) angeordnet sind, zum vollflächigen Siegeln der Faltappen im Bereich der Innen-Seitenwände (93).

9. Vorrichtung nach Anspruch 7 oder 8, **dadurch gekennzeichnet, dass** im Anschluss an den Faltrevolver (65) ein Förderer (85) für den Packungsinhalt mit Innenzuschnitt (26) angeordnet ist, der ortsfeste Faltweichen zum Falten von Faltlappen im Bereich der Innen-Seitenwände (35) aufweist und dass im weiteren Förderweg des Packungsinhalts mit Innenzuschnitt (26) im Bereich eines Siegelrevolvers (92) mehrere Siegeleinrichtungen (92) angeordnet sind zum vollflächigen Siegeln der Innen-Seitenwände (35) mit mehrfach überlappenden Faltlappen.

10. Vorrichtung nach Anspruch 7, **dadurch gekennzeichnet, dass** Saugkanäle (83) in die Siegelleiste (77) münden zum Halten eines Faltlappens (108) für die Flossennaht (37) in einer Siegelposition.

11. Vorrichtung nach Anspruch 7 oder einem der weiteren vorhergehenden Ansprüche, **dadurch gekennzeichnet, dass** dem Faltrevolver (65) ein Revolver (52) vorgeordnet ist, der Taschen (53) zur aufeinanderfolgenden Aufnahme eines Kragens (16) und einer Zigarettengruppe (11) zur Vereinigung derselben aufweist, wobei vorzugsweise die Kragen (16) mit einem Querförderer (60) dem Revolver (52) seitlich zuführbar und vom Querförderer (60) mittels eines Stempels (59) in eine Formtasche (61) übergebbar und durch die Formtasche (61) einer Tasche (53) zuführbar sind.

12. Vorrichtung nach Anspruch 7 oder einem der weiteren Ansprüche, **dadurch gekennzeichnet, dass** Drehachsen von Faltrevolver (65) und Siegelrevolver (93) sowie der Förderer (65) in einer Ebene angeordnet sind, und dass eine Ausschubstation des Förderers (52) ebenfalls in dieser Ebene angeordnet ist, und dass die Drehachsen von Faltrevolver (65) und Siegelrevolver (93) quer zur Transportrichtung der Innenpackungen (13) gerichtet sind, wohingegen eine Drehachse des Förderers (52) parallel zur Transportrichtung weist.

## Claims

1. A method of producing packs (10) for cigarettes, having an outer pack (12), preferably configured as a hinge-lid box, and an inner pack (13) as a sealed block (25) with an inner blank (26) which encloses the pack contents, in particular a cigarette group (11), and is made of preferably aroma-tight and moisture-tight, thermally sealable sheet material, the inner pack having, in the region of an inner end wall (33), an opening aid which can be used a number of times and, in the region of side walls of the inner pack (13), folding flaps which are connected to one another by thermal sealing, wherein the pack contents are conveyed by the supplied inner blank (26) with the pack contents being wrapped partially in the inner blank (26), and in that folding flaps (108, 109) in the region of an inner rear wall (34) of the inner blank (26) are connected to one another by thermal sealing to form a fin seam (37), and in that end regions of the fin seam (37) are folded over into the plane of inner side walls (35) in such a way that they are arranged at a spacing (A) from regions of folding flaps which cover one another multiple times, in the region of the inner side walls (35), **characterized in that**
a) the pack contents are conveyed by the supplied inner blank (26) into a pocket of a folding turret (65), and **in that** the folding flaps (108, 109) in the region of the inner rear wall (34) of the inner blank (26) are connected to one another on the folding turret (65) by thermal sealing to form a fin seam (37), in particular in a plurality of successive sealing stations (78), which are arranged on the circumference of the folding turret (65), while the cyclically driven folding turret (65) is at a standstill,
b) after the sealing of the fin seam (37) in the region of the inner rear wall (34) and the folding over of the fin seam (37) against the inner rear wall (34), folding flaps (110, 111) of the inner blank (26) are folded into the region of the inner side walls (35) with covering of corner flaps (75, 89) of the inner blank (26) and are sealed to one another, wherein, first of all, the corner flaps (75, 89) are folded into the plane of the inner side walls (35) and, afterward, folding flaps (110) of the inner rear wall (34) with end regions of the fin seam (37) and, furthermore, folding flaps (111) of the inner front wall (32) are folded, and **in that** the inner side walls (35) are sealed completely afterward,
c) the pack contents, prior to the inner blank (26) being fed, are fed an inner collar (38), which is positioned in a U-shaped manner in a turret (52) and into which the cigarette group (11), as pack contents, is then pushed, and **in that** the pack contents with inner collar (38) are conveyed out of the turret (52) and conveyed into the folding turret (65) by the supplied inner blank (26).

2. The method as claimed in claim 1 or one of the other preceding claims, **characterized in that,** in the region of the folding turret (65), first of all the fin seam (37) is formed, and **in that**, afterward in the region of a horizontally directed conveyor (85) which adjoins the folding turret (65), the envelope-like folding of the folding flaps (110, 111) takes place in the region of the inner side walls (35), and **in that**, afterward on a sealing turret (92) which adjoins the conveyor (85), the sealed block (25) is completed by sealing of the folding flaps (110, 111) and corner flaps (75, 89) which overlap one another, in the region of the inner side walls (35).

3. The method as claimed in claim 1 or one of the further preceding claims, **characterized in that** the inner blank (26) is fed to the folding turret (65) from above, the inner collar (38) being fed to the turret (52) from the side, in particular in each case as a continuous material web (54, 67), which is then cut up into individual blanks.

4. The method as claimed in claim 3, **characterized in that,** while the pack contents are conveyed with inner collar (38) into a pocket (64) of the folding turret (65), the inner blank (26) is placed against the pack contents and/or the inner collar (38), preferably by way of an outer guide (76) which is arranged on the circumference of the folding turret (65) in conjunction with a corresponding guide (112), which together form an orifice for the pack contents with inner collar (38).

5. The method as claimed in claim 4 or one of the other preceding claims, **characterized in that,** during feeding of the pack contents into a pocket (64) of the folding turret (65), a folding flap (108) of the inner blank (26) for the fin seam (37) is placed against a sealing bar (77) which is assigned to the pocket (64) by way of a pusher nose (82) which is formed on a pusher (63) for the pack contents, and is held there by vacuum, in particular by at least one suction channel (83), wherein the sealing bar is preferably arranged laterally next to the pocket (64) and at a spacing from the circumference of the folding turret (65), and **in that** a further folding flap (109) for the fin seam is guided by the circumference of the folding turret (65) through a sealing jaw (79) of a sealing station (78) to the sealing bar (77) and is sealed with the first folding flap (108) by the application of pressure and heat to the fin seam (37).

6. The method as claimed in claim 4, 5 or one of the other preceding claims, **characterized in that,** during the production of the packs, the height of the orifice is changed, namely firstly is reduced in order to feed the pack contents with inner blank (26) to the pocket (64) and secondly is enlarged, in order that the pusher (63) can be moved through between the corresponding guide (112) and the upper guide (76).

7. An apparatus for producing packs (10) for cigarettes, having an outer pack (12) preferably configured as a hinge-lid box, and an inner pack (13) as a sealed block (25) with an inner blank (26) which encloses the pack contents, in particular a cigarette group (11), and is made of preferably aroma-tight and moisture-tight, thermally sealable sheet material, the inner pack having, in the region of an inner end wall (33), an opening aid which can be used a number of times and, in the region of inner side walls (35) and an inner rear wall (34), folding flaps which are connected to one another by thermal sealing, wherein end regions of the fin seam (37) are arranged at a spacing (A) from regions of folding flaps which cover one another multiple times, in the region of the inner side walls (35), **characterized by**
a) a folding turret (65) with pockets (64) for receiving pack contents in each case with an inner blank (26) positioned around the same, and by preferably a plurality of sealing stations (78), which are arranged on the circumference of the folding turret (65) and are intended for sealing folding flaps on the folding turret (65) in the region of an inner rear wall (34) for the inner blank (26) in the manner of a fin seam (37) while the cyclically driven folding turret (65) is at a standstill, and with one or more folding means for folding the fin seam (37) against the inner rear wall (34) and the inner side walls (35),
b) wherein the or each sealing station (78) has a sealing bar (77), which is assigned to the pockets (64) of the folding turret (65), and a sealing jaw (79), which is arranged at a fixed location on the circumference of the folding turret (65), wherein the sealing jaw (79) can be spaced apart from the sealing bar (77) during the rotary phase of the folding turret (65) and for the purpose of sealing the fin seam (37) can be brought into abutment against the sealing bar (77), in particular by movement in the radial direction in relation to the circumference of the folding turret (65), and wherein the sealing bar (77) is arranged at a spacing from the circumference of the folding turret (65) laterally next to the pocket (64),
c) wherein the pack contents, prior to the inner blank (26) being fed, can be fed an inner collar (38), which can be positioned in a U-shaped manner in a turret (52) and into which the cigarette group (11), as pack contents, can then pushed, and wherein the pack contents with inner collar (38) can be conveyed out of the turret (52) and can be conveyed into the folding turret (65) by the supplied inner blank (26).

8. The apparatus as claimed in claim 7, **characterized in that** a plurality of sealing stations (78) which are arranged on the circumference of the folding turret (65) are provided for sealing folding flaps of the inner blank (26) in the region of an inner rear wall (34) of the inner blank (26) in the manner of a fin seam (37), and **in that** the inner pack (13) which is sealed partially to this extent can be transported along a horizontal conveying path (85) which adjoins the folding turret (65) and in the region of which lateral folding flaps can be folded in the manner of an envelope in the region of the inner side walls (35), and **in that** the inner pack (13) which is completely folded and is sealed partially to this extent can be introduced into a pocket (91) of an adjacent sealing turret (92), and **in that** sealing stations (93) are arranged on the circumference of the sealing turret (92), for sealing the folding flaps over the full surface area in the region of the inner side walls (93).

9. The apparatus as claimed in claim 7 or 8, **characterized in that** the folding turret (65) is followed by a conveyor (85) for the pack contents with inner blank (26), this conveyor having fixed-location folding diverters for folding the folding flaps in the region of the inner side walls (35), and **in that**, arranged further along the conveying route of the pack contents with inner blank (26) in the region of a sealing turret (92), are a plurality of sealing devices (93), for sealing the inner side walls (35), with multiple-overlap folding flaps over the entire surface area.

10. The apparatus as claimed in claim 7, **characterized in that** suction channels (83) open into the sealing bar (77) for holding a folding flap (108) for the fin seam (37) in a sealing position.

11. The apparatus as claimed in claim 7 or one of the other preceding claims, **characterized in that** a turret (52) is arranged upstream of the folding turret (65), which turret (52) has pockets (53) for successively receiving a collar (16) and a cigarette group (11) in order to combine them, wherein the collars (16) can preferably be fed laterally to the turret (52) by way of a transverse conveyor (60) and can be transferred from the transverse conveyor (60) into a forming pocket (61) by means of a ram (59) and can be fed by the forming pocket (61) to a pocket (53).

12. The apparatus as claimed in claim 7 or one of the other claims, **characterized in that** rotational axes of folding turret (65) and sealing turret (93) and of the conveyors (65) are arranged in one plane, and **in that** a push-out station of the conveyor (52) is likewise arranged in this plane, and wherein the rotational axes of the folding turret (65) and the sealing turret (93) are directed transversely with respect to the transport direction of the inner packs (13), whereas a rotational axis of the conveyor (52) points parallel to the transport direction.

## Revendications

1. Procédé de fabrication d'emballages (10) pour cigarettes, comprenant un emballage extérieur (12), de préférence réalisé sous forme de boîte pliante, et un emballage intérieur (13) sous forme de bloc d'étanchéité (25) avec une découpe interne (26) entourant le contenu de l'emballage, en particulier un groupe de cigarettes (11), constituée d'un film thermoscellable de préférence étanche aux arômes et à l'humidité, qui présente, dans la région d'une paroi frontale interne (33), un auxiliaire d'ouverture réutilisable et, dans la région de parois latérales de l'emballage intérieur (13), des volets pliants connectés les uns aux autres par thermoscellage, le contenu de l'emballage étant avancé à travers la découpe interne (26) maintenue prête avec enveloppement partiel du contenu de l'emballage dans la découpe interne (26) et des volets pliants (108, 109) étant connectés les uns aux autres par thermoscellage pour former un joint à bords repliés (37) dans la région d'une paroi arrière interne (34) de la découpe interne (26), et des régions d'extrémité du joint à bords repliés (37) étant repliées dans le plan de parois latérales internes (35) de telle sorte qu'elles soient disposées à distance (A) de régions de volets pliants se recouvrant plusieurs fois dans la région des parois latérales internes (35), **caractérisé en ce que**
a) le contenu de l'emballage est avancé à travers la découpe interne (26) maintenue prête dans une cavité d'une tourelle de pliage (65), et **en ce que** les volets pliants (108, 109) sont connectés les uns aux autres dans la région de la paroi arrière interne (34) de la découpe interne (26) sur la tourelle de pliage (65) par thermoscellage pour former un joint à bords repliés (37), en particulier dans plusieurs postes de scellage successifs (78) disposés sur la périphérie de la tourelle de pliage (65) pendant une phase d'arrêt de la tourelle de pliage (65) entraînée de manière cadencée,
b) après le scellage du joint à bords repliés (37) dans la région de la paroi arrière interne (34) et le repliement du joint à bords repliés (37) contre la paroi arrière interne (34), des volets pliants (110, 111) de la découpe interne (26) sont pliés et scellés les uns aux autres dans la région des parois latérales internes (35) avec recouvrement de volets de coin (75, 89) de la découpe interne (26), les volets de coin (75, 89) étant d'abord pliés dans le plan des parois latérales internes (35), puis des volets pliants (110) de la paroi arrière interne (34) étant pliés avec des régions d'extrémité du joint à bords repliés (37) et en outre des volets pliants (111) de la paroi avant interne (32) étant pliés, et **en ce que** les parois latérales internes (35) sont ensuite scellées sur toute leur surface,
c) un bord interne (38) est acheminé au contenu de l'emballage avant l'acheminement de la découpe interne (26), lequel est positionné en forme de U dans une tourelle (52) et dans lequel est ensuite introduit le groupe de cigarettes (11) en tant que contenu de l'emballage et **en ce que** le contenu de l'emballage avec le bord interne (38) est évacué de la tourelle (52) et est introduit à travers la découpe interne (26) maintenue prête dans la tourelle de pliage (65).

2. Procédé selon la revendication 1 ou selon l'une quelconque des autres revendications précédentes, **caractérisé en ce que** dans la région de la tourelle de pliage (65) est d'abord formé le joint à bords repliés (37) et **en ce que** dans la région d'un transporteur (85) orienté horizontalement et se raccordant à la tourelle de pliage (65) se produit ensuite le pliage de type enveloppe des volets pliants (110, 111) dans la région des parois latérales internes (35) et **en ce qu'**ensuite le bloc d'étanchéité (25) est complété au niveau d'une tourelle de scellage (92) se raccordant au transporteur (85), par scellage des volets de coin (75, 89) et des volets pliants (110, 111) se chevauchant mutuellement dans la région des parois latérales internes (35).

3. Procédé selon la revendication 1 ou selon l'une quelconque des autres revendications précédentes, **caractérisé en ce que** la découpe interne (26) est acheminée par le haut à la tourelle de pliage (65), le bord interne (38) étant acheminé latéralement à la tourelle (52), en particulier à chaque fois sous forme de bande de matériau continue (54, 67) qui est ensuite découpée en découpes individuelles.

4. Procédé selon la revendication 3, **caractérisé en ce que** la découpe interne (26), lors de l'introduction du contenu de l'emballage avec le bord interne (38) dans une cavité (64) de la tourelle de pliage (65), est placée contre le contenu de l'emballage ou le bord interne (38), de préférence par un guide extérieur (76) disposé à la périphérie de la tourelle de pliage (65) en liaison avec un guide conjugué (112), qui forment ensemble une embouchure pour le contenu de l'emballage avec le bord interne (38).

5. Procédé selon la revendication 4 ou selon l'une quelconque des autres revendications précédentes, **caractérisé en ce qu'**un volet pliant (108) de la découpe interne (26) pour le joint à bords repliés (37), lors de l'acheminement du contenu de l'emballage dans une cavité (64) de la tourelle de pliage (65), est placé, par un ergot de tiroir (82) réalisé sur un tiroir (63) pour le contenu de l'emballage, contre une barre de scellage (77) associée à la cavité (64) et y est maintenu par une dépression, notamment par au moins un canal d'aspiration (83), la barre de scellage étant de préférence disposée latéralement à côté de la cavité (64) et à distance de la périphérie de la tourelle de pliage (65), et **en ce qu'**un volet pliant supplémentaire (109) pour le joint à bords repliés est guidé depuis la périphérie de la tourelle de pliage (65) à travers une mâchoire de scellage (79) d'un poste de scellage (78) jusqu'à la barre de scellage (77) et est scellé avec le premier volet pliant (108) par application de pression et de chaleur pour produire le joint à bords repliés (37).

6. Procédé selon la revendication 4, 5 ou selon l'une quelconque des autres revendications précédentes, **caractérisé en ce que** pendant la fabrication des emballages, la hauteur de l'embouchure est modifiée, à savoir est d'une part réduite pour acheminer le contenu de l'emballage avec la découpe interne (26) jusqu'à la cavité (64), et d'autre part est augmentée afin que le tiroir (63) puisse être déplacé entre le guide conjugué (112) et le guide supérieur (76).

7. Dispositif de fabrication d'emballages (10) pour cigarettes, comprenant un emballage extérieur (12), de préférence réalisé sous forme de boîte pliante, et un emballage intérieur (13) sous forme de bloc d'étanchéité (25) avec une découpe interne (26) entourant le contenu de l'emballage, en particulier un groupe de cigarettes (11), constituée d'un film thermoscellable de préférence étanche aux arômes et à l'humidité, qui présente, dans la région d'une paroi frontale interne (33), un auxiliaire d'ouverture réutilisable et, dans la région de parois latérales internes (35) ainsi que d'une paroi arrière interne (34), des volets pliants connectés les uns aux autres par thermoscellage, des régions d'extrémité du joint à bords repliés (37) étant disposées à distance (A) de régions de volets pliants se recouvrant plusieurs fois dans la région des parois latérales internes (35), **caractérisé par**
a) une tourelle de pliage (65) avec des cavités (64) pour recevoir à chaque fois un contenu d'emballage avec une découpe interne (26) placée autour de celui-ci et par de préférence plusieurs postes de scellage (78) disposés à la périphérie de la tourelle de pliage (65) pour sceller des volets pliants sur la tourelle de pliage (65) dans la région d'une paroi arrière interne (34) de la découpe interne (26) à la manière d'un joint à bords repliés (37) pendant une phase d'arrêt de la tourelle de pliage (65) entraînée de manière cadencée et comprenant un ou plusieurs moyens de pliage pour plier le joint à bords repliés (37) contre la paroi arrière interne (34) et les parois latérales internes (35),
b) le ou chaque poste de scellage (78) présentant une barre de scellage (77) associée aux cavités (64) de la tourelle de pliage (65) ainsi qu'une mâchoire de scellage (79) disposée fixement à la périphérie de la tourelle de pliage (65), la mâchoire de scellage (79), pendant la phase de rotation de la tourelle de pliage (65), pouvant être espacée de la barre de scellage (77) et pouvant être amenée en appui contre la barre de scellage (77) pour sceller le joint à bords repliés (37), en particulier par déplacement dans la direction radiale par rapport à la périphérie de la tourelle de pliage (65), et la barre de scellage (77) étant disposée à distance de la périphérie de la tourelle de pliage (65) latéralement à côté de la cavité (64),
c) un bord interne (38) pouvant être acheminé au contenu de l'emballage avant l'acheminement de la découpe interne (26), lequel peut être positionné en forme de U dans une tourelle (52) et dans lequel peut ensuite être introduit le groupe de cigarettes (11) en tant que contenu de l'emballage et le contenu de l'emballage avec le bord interne (38) pouvant être évacué de la tourelle (52) et pouvant être introduit à travers la découpe interne (26) maintenue prête dans la tourelle de pliage (65).

8. Dispositif selon la revendication 7, **caractérisé en ce que** plusieurs postes de scellage (78) disposés à la périphérie de la tourelle de pliage (65) sont prévus pour sceller des volets pliants de la découpe interne (26) dans la région d'une paroi arrière interne (34) de la découpe interne (26) à la manière d'un joint à bords repliés (37), et **en ce que** l'emballage intérieur (13) à ce moment partiellement scellé peut être transporté le long d'une section d'avance (85) horizontale se raccordant à la tourelle de pliage (65), dans la région de laquelle section d'avance des volets pliants latéraux peuvent être pliés en mode enveloppe dans la région des parois latérales internes (35), et **en ce que** l'emballage intérieur (13), à ce moment partiellement scellé et complètement plié, peut être introduit dans une cavité (91) d'une tourelle de scellage suivante (92), et **en ce que** des postes de scellage (93) sont disposés à la périphérie de la tourelle de scellage (92) pour sceller sur toute leur surface les volets pliants dans la région des parois latérales internes (93).

9. Dispositif selon la revendication 7 ou 8, **caractérisé en ce qu'**à la suite de la tourelle de pliage (65) est disposé un transporteur (85) pour le contenu de l'emballage avec la découpe interne (26), lequel présente des aiguilles de pliage fixes pour plier des volets pliants dans la région des parois latérales internes (35), et **en ce que** dans la trajectoire d'avance supplémentaire du contenu de l'emballage avec la découpe interne (26) dans la région d'une tourelle de scellage (92), plusieurs dispositifs de scellage (92) sont disposés de manière à sceller sur toute leur surface les parois latérales internes (35) avec des volets pliants se chevauchant plusieurs fois.

10. Dispositif selon la revendication 7, **caractérisé en ce que** des canaux d'aspiration (83) débouchent dans la barre de scellage (77) pour retenir un volet pliant (108) pour le joint à bords repliés (37) dans une position de scellage.

11. Dispositif selon la revendication 7 ou selon l'une quelconque des autres revendications précédentes, **caractérisé en ce que** la tourelle de pliage (65) est précédée d'une tourelle (52) qui présente des cavités (53) pour recevoir successivement un bord (16) et un groupe de cigarettes (11) afin de les réunir, les bords (16) pouvant de préférence être acheminés latéralement à la tourelle (52) avec un transporteur transversal (60) et pouvant être transférés du transporteur transversal (60) au moyen d'un poinçon (59) dans une cavité de formage (61) et pouvant être acheminés par la cavité de formage (61) à une cavité (53).

12. Dispositif selon la revendication 7 ou selon l'une quelconque des autres revendications, **caractérisé en ce que** des axes de rotation de la tourelle de pliage (65) et de la tourelle de scellage (93) ainsi que le transporteur (65) sont disposés dans un plan et **en ce qu'**un poste d'éjection du transporteur (52) est également disposé dans ce plan, et **en ce que** les axes de rotation de la tourelle de pliage (65) et de la tourelle de scellage (93) sont orientés transversalement à la direction de transport des emballages intérieurs (13), tandis qu'un axe de rotation du transporteur (52) est orienté parallèlement à la direction de transport.
